## Europäisches Patentamt

## European Patent Office

## Office européen des brevets

(19)

(11) Veröffentlichungsnummer: **0 075 101**
**A2**

(12) # EUROPÄISCHE PATENTANMELDUNG

(21) Anmeldenummer: **82107283.2**

(22) Anmeldetag: **11.08.82**

(51) Int. Cl.³: **G 01 N 27/12**

(30) Priorität: **22.09.81 CH 6115/81**

(43) Veröffentlichungstag der Anmeldung: **30.03.83**
**Patentblatt 83/13**

(84) Benannte Vertragsstaaten: **AT BE CH DE FR GB IT LI NL**

(71) Anmelder: **CERBERUS AG, Alte Landstrasse 411,
CH-8708 Männedorf (CH)**

(72) Erfinder: **Bukowiecki, Stanislaw, Dr.sc.nat., Chem.,
Schwarzbachstrasse 30, CH-8713 Uerikon (CH)**
Erfinder: **Paglotke, Karlheinz, Breitwiesstrasse 31,
CH-8135 Langnau am Albis (CH)**

(74) Vertreter: **Grieskamp, Johannes Peter, Im
Baumgarten 7, CH-8123 Ebmatingen (CH)**

(54) **Verfahren und Vorrichtung zur Reduzierung von durch Störgase hervorgerufenen Falschalarmen in Gaswarnanlagen.**

(57) Ein Metalloxid-Halbleiter, der auf verschiedene Temperaturen aufgeheizt wird, wird im Zusammenhang mit einer elektronischen Schaltung zur Redzierung von durch Störgase hervorgerufenen Falschalarmen in Gaswarnanlagen und zur Bestimmung der Zusammensetzung eines Gasgemisches verwendet. Die Temperatur des Metalloxid-Halbleiters wird nach Erreichen eines bestimmten Wertes (T) um einen Betrag ($\triangle$T) entweder zur positiven oder negativen Seite bzw. zur positiven und negativen Seite geändert. Die hierdurch hervorgerufene Änderung der Leitfähigkeit des Metalloxid-Halbleiters wird in einem Vergleicher (6) und in Schaltungen (7, 8, 9, 10) für die verschiedenen Spitzenwerte von Gaskomponenten (A, B) ausgewertet.

EP 0 075 101 A2

Verfahren und Vorrichtung zur Reduzierung von durch Störgase
     hervorgerufenen Falschalarmen in Gaswarnanlagen

==================================================================

Die Erfindung betrifft ein Verfahren sowie Vorrichtungen zur
Reduzierung von durch Störgase hervorgerufenen Falschalarmen
in Gaswarnanlagen, bzw. sie dient zur Bestimmung der Zusammensetzung eines Gasgemisches, wobei als gasempfindliches
Element ein Metalloxid-Halbleiter verwendet wird, der auf
konstante Temperatur aufgeheizt ist.

Warnung und Schutz vor toxischen und explosiven Gasen bzw.
chemischen Dämpfen sind heute in der chemischen Industrie,
in Verkehrsanlagen, wie Garagen und  Tunnels, und in Heizanlagen von grosser Notwendigkeit. Es sind bereits Metalloxid-
Halbleiter auf dem Markt erhältlich, die als Sensoren für
diese Zwecke verwendet werden können. Diese Halbleiter
reagieren im erhitzten Zustand auf in ihrer Umgebung befindliche reduzierende Gase und Dämpfe sowie $H_2O$ mit einer
Aenderung der Leitfähigkeit, die als Indikator der vorhandenen integralen Gaskonzentration benutzt wird. Die Sensoren
geben daher keine Auskunft, um welche Gaskomponente oder um
welche chemischen Dämpfe es sich handelt. In der Fachsprache
bedeutet dies: Solche Sensoren haben bezüglich der Gasempfindlichkeit ein "breitbandiges" Ansprech-Verhalten. Demgegenüber besteht das Bedürfnis, den Konzentrationsverlauf
einer einzelnen Gas- oder Dampfkomponente festzustellen.
Diese Forderung der Praxis wurde dadurch erfüllt, dass
spezielle Gas-Sensoren für ein bestimmtes Gas (z.B. selektiver $H_2S$-Sensor) oder für einen bestimmten Dampf hergestellt
wurden oder dass ein Metalloxid-Halbleiter mit vorgeschalteten Filtern, die unerwünschte Gase abblocken, ausgerüstet
ist. Nachteilig hierbei ist, dass durch eine solche absolute Selektivität andere gefährliche Gaskomponenten oder Dampfkomponenten, die sich gleichzeitig in der Umgebung befinden, nicht erfasst werden. Dies sei an zwei Beispielen näher erläutert. In einer Garage sei eine Gaswarnanlage installiert, die selektiv auf Kohlenmonoxid (CO) anspricht. Benzindämpfe, die durch versehentlich auslaufendes Benzin entstehen, werden daher nicht erfasst. Um auch diese gefährlichen Gase zu erfassen, benötigt man breitbandige Metalloxid-Halbleiter, die sowohl auf CO als auch auf Benzindämpfe ansprechen. Durch diesen Kompromiss wird das Problem der Falschalarme aber wieder eingeführt, wie aus folgenden Ueberlegungen leicht einzusehen ist. Der Metalloxid-Halbleiter spricht auf CO und Benzindämpfe mit ähnlicher Empfindlichkeit an. Nun ist aber die Konzentration von giftigem Kohlenmonoxid, für welche Abwehrmassnahmen zum Schutze von Personen eingeleitet werden müssen bei etwa 50 ppm, während Benzindämpfe erst bei viel höheren Konzentrationen explosiv werden. Der Metalloxid-Halbleiter, beispielsweise auf eine Empfindlichkeit zur Detektion von 50 ppm CO eingestellt, wird daher eine Alarmsituation vortäuschen, auch wenn es sich nur um harmlose Konzentrationen von Benzindämpfen handelt. Aus diesem Grunde wurde bewusst auf die Detektion der Benzindämpfe verzichtet, so dass speziell hierauf ausgerichtete Abwehrmassnahmen nicht erfolgen.

Als zweites Beispiel wird auf unterirdische Fernmeldeeinrichtungen der Postverwaltungen hingewiesen, die durch diffuse Einbrüche von Gasen aus dem öffentlichen Gasleitungsnetz explosionsgefährdet sind. Ausserdem sind in den Räumen der Fernmeldeeinrichtungen Akkumulatoren zur Notstromversorgung vorgesehen, die während der Betriebszeit Wasserstoff ($H_2$) entwickeln. Zur Einleitung geeigneter und spezifischer Abwehrmassnahmen besteht daher in diesen Räumen die Aufgabe, zwischen $H_2$ als Störgas und den explosionsträchtigen Gasen aus dem Gasversorgungsnetz zu unterscheiden. Auch in diesem Fall löst der Wasserstoff falsche Alarme aus, die man bisher bewusst in Kauf genommen hat, das heisst die Belüftungs- und
Entlüftungsanlagen sind oft sinnlos eingeschaltet worden und
haben viel elektrische Energie verschwendet.

In der DE-OS 2 313 413 ist ein Verfahren zur Bestimmung des
Gehaltes von Gaskomponenten in einem Gasgemisch mittels
Metalloxid-Halbleitern beschrieben. Der Metalloxid-Halbleiter
ist speziell auf die in Bergwerken vorkommende CO-Komponente
in einem Gasgemisch eingestellt. Er wird durch einen Heizdraht auf eine obere Temperatur aufgeheizt. Während und nach
der unkontrollierten Abkühlungsphase auf die Raumtemperatur
erfolgt die CO-Messung, die in einer anschliessenden elektronischen Auswerteschaltung differenziert und integriert wird.
Diese Auswertung erfolgt nur in den Momenten, wo keine Messung
durchgeführt wird. Nachteilig hierbei ist, dass die beschriebene Vorrichtung nur auf eine Gaskomponente ansprechbar ist
und der Auswertevorgang zeitlich vom Messvorgang getrennt
ist. Letzteres führt zu Verzögerungen bei der Alarmgabe.

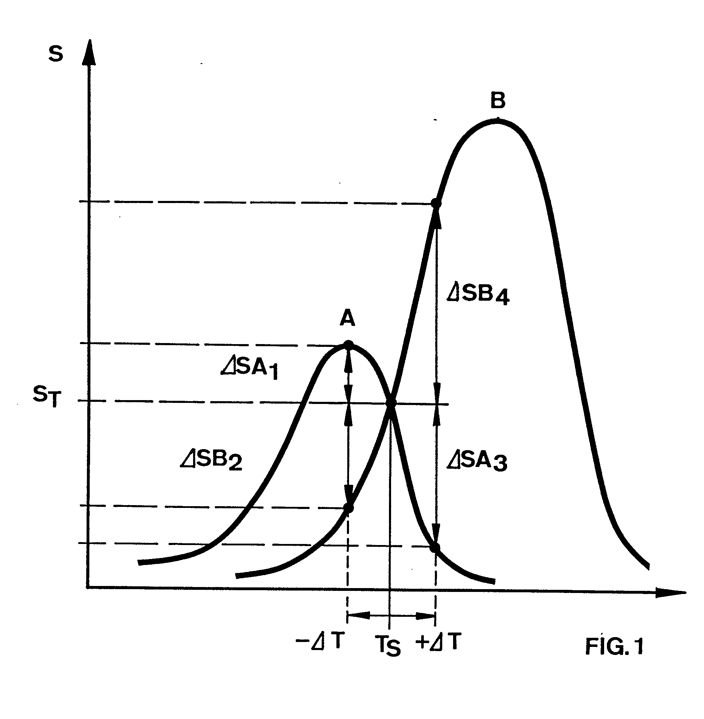

Zur Erläuterung der bisherigen Ausführungen über die Metalloxid-Halbleiter wird auf die Figur 1 verwiesen, die das bekannte Ansprechverhalten eines solchen Halbleiters mit Ansprechprofilen von zwei Gasen beispielsweise zeigt.

Die Aufgaben der Erfindung liegen darin, die breitbandige
Empfindlichkeit des Metalloxid-Halbleiters voll auszunutzen
und bei Vorhandensein von Gas- bzw. Dampfkomponenten, die zu
einem Alarm führen könnten, zusätzlich auch die Art der Komponente zu eruieren. Ferner bezweckt die Erfindung, eine
Meldereinheit als Teil eines Gaswarnsystems zu schaffen, die
individuell auf ein bestimmtes Gas- und Dampfpaar programmierbar ist.

Ferner wird die für jede Gas- und Dampfkomponente spezifische
Abwehrmassnahme getroffen. Die gesamte Anlage wird mit ein-

- 4 -

fachen Mitteln und kleinen Herstellungskosten konstruiert und erlaubt eine einfache Wartung und Pflege während der Betriebszeit.

Die Kompatibilität der programmierbaren Meldereinheiten mit bereits bestehenden Gasmeldeanlagen ist gewährleistet.

Die Aufgaben der Erfindung werden durch die in den Ansprüchen 1, 2 und 3 definierten Merkmale gelöst.

Ein Ausführungsbeispiel der Erfindung wird anhand der Zeichnungen näher erläutert. Es zeigen:

Fig. 1 das Ansprechverhalten eines gas- bzw. dampfempfindlichen Metalloxid-Halbleiters;

Fig. 2 der zeitliche Verlauf des Ausgangssignals des Metalloxid-Halbleiters bei der Detektion eines Gases oder Dampfes;

Fig. 3 die elektronische Schaltung zur Auswertung des Ausgangssignals des Metalloxid-Halbleiters.

In der Fig. 1 ist auf der Abszisse die Temperatur aufgetragen, auf die der Metalloxid-Halbleiter aufgeheizt wird. Die Ordinate zeigt die Leitfähigkeitsänderung des Halbleiters bei den verschiedenen Heiztemperaturen. Als Beispiel sind nur die sogenannten Ansprechprofile von zwei unterscheidbaren Gasen bzw. Dämpfen A und B dargestellt. Es sei besonders darauf hingewiesen, dass die Leitfähigkeit des Halbleiters in der Umgebung von Gasen bei verschiedenen Temperaturen stark unterschiedlich ist; das heisst Gase oder Dämpfe mit gleicher Konzentration erzeugen Ausgangssignale mit unterschiedlichen Spannungswerten. Dies ist der Grund, weshalb bisher eine exakte Auswertung der Gasart bzw. Dampfart nicht möglich war,

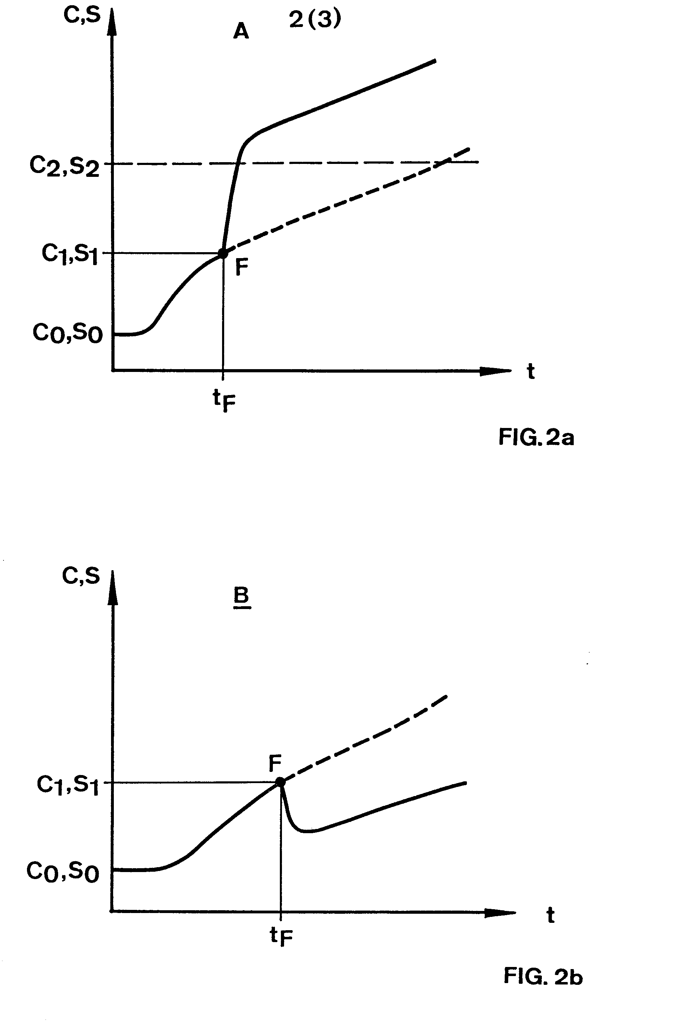

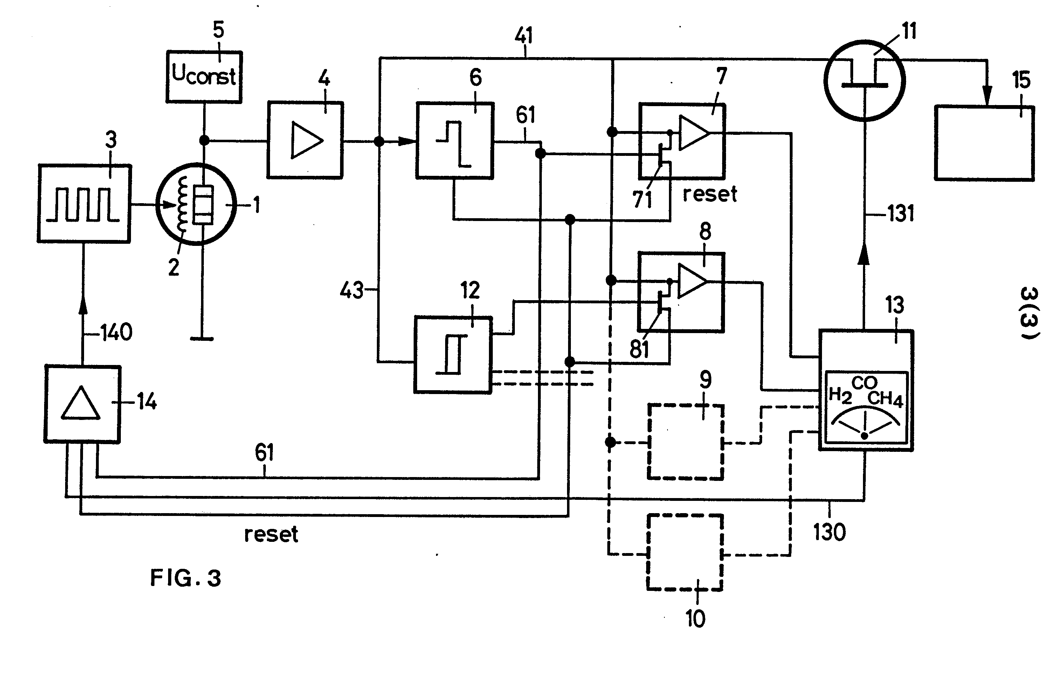

In der Fig. 1 sind die beiden Gase A und B stellvertretend für ein Gaspaar dargestellt. Das eingangs erwähnte erste Beispiel mit der Garage kann auf diese Figur lesbar sein. In diesem Fall wäre das Gas A Kohlenmonoxid (CO) und die Störgrösse B (Benzindämpfe). Mit der Erfindung, die später anhand der Figuren 2 und 3 noch näher erklärt wird, soll erreicht werden, dass der Gasalarm nur bei Vorhandensein der Komponente A, d.h. des Kohlenmonoxids, automatisch erfolgt. Der Metalloxid-Halbleiter wird auf die Temperatur $T_S$, die zum Beispiel ca. $300^\circ$ Celsius sein kann, eingestellt. Die Einstellung erfolgt durch eine elektrische Heizung. Wenn nun Kohlenmonoxid (Komponente A) oder Benzindämpfe (Komponente B) in der Umgebung des Halbleiters vorhanden sind, bildet sich eine Leitfähigkeit $S_T$ des Halbleiters aus. Dies wird auf die in Fig. 3 gezeigte elektronische Schaltung gegeben und dort in der Weise ausgewertet, dass eine sogenannte Vorwarnung erzeugt wird. Die elektrische Heizung des Halbleiters wird in diesem Fall so durch die elektronische Schaltung gesteuert, dass die Temperatur T um den Betrag $-\Delta T$ abgesenkt wird. Für die gewünschte Komponente A ergibt sich eine Erhöhung des Ausgangssignals des Halbleiters um den Betrag $\Delta SA_1$. Für die Störkomponente B ergibt sich eine Erniedrigung des Ausgangssignals um den Betrag $\Delta SB_2$. Hierdurch wird der elektronischen Schaltung die Diskriminierung zwischen den beiden Komponenten A und B genau vorgegeben, so dass sie die für die Beseitigung der Komponente A notwendigen Abwehrmassnahmen einleiten kann. Diese gewünschte Funktion erfolgte, obwohl die Störkomponente B eine viel grössere Wirkung auf das Ausgangssignal hat als die gewünschte Komponente A.

Im folgenden soll die Erfindung anhand des in der Einleitung genannten zweiten Beispiels erklärt werden. In den unterirdi-

schen Räumen von Fernmeldeanlagen, wie Vermittlungszentralen, Verstärkerämter bzw. Kabelschächte, können explosionsgefährliche Gase aus dem Gasversorgungsnetz der Umgebung eindringen. Diese sollen entfernt werden. Diese Gase seien in der Fig. 1 mit der Komponente B dargestellt. Das Wasserstoffgas sei gemässFig. 1 mit der Komponente A dargestellt. Der Metalloxid-Halbleiter ist, wie bereits im ersten Beispiel beschrieben, auch in diesem Fall auf die Temperatur $T_S$ eingestellt. Bei Vorhandensein einer oder beider Komponenten A, B besitzt der Metalloxid-Halbleiter eine Leitfähigkeit $S_T$ und erzeugt ein entsprechendes Ausgangssignal. In diesem Fall veranlasst die in der Fig. 3 näher beschriebene elektronische Schaltung eine Erhöhung der Temperatur T um den Betrag $+\Delta T$. In diesem Fall ergibt sich für das gewünschte Gas B eine Erhöhung des Ausgangssignals um den Betrag $\Delta SB_4$. Für das nicht gewünschte und als Störgrösse betrachtete Gas A ergibt sich eine Erniedrigung des Ausgangssignals um den Betrag $\Delta SA_3$. Mit dieser Information kann die elektronische Schaltung der Fig. 3 die gasspezifische Abwehrmassnahme einleiten.

Unter gasspezifischen Massnahmen wird verstanden, dass z.B. zur Beseitigung von Kohlenmonoxid (CO) die Belüftung und Entlüftung eingeschaltet wird und für die Beseitigung von Benzindämpfen zusätzlich zur Be- und Entlüftung die Fehlerquelle festgestellt wird. Gegebenenfalls müssen dann die geeigneten Massnahmen ergriffen werden um einen weiteren Ausfluss von Benzin zu verhindern. Beim Beispiel der Fernmeldeanlagen ist die gasspezifische Abwehrmassnahme nur auf die Gase abgestellt, die aus dem Gasversorgungsnetz der Umgebung kommen.

Die Figuren 2a und 2b zeigen den zeitlichen Verlauf der Aenderung der Konzentrationen der zu überwachenden Gase und der Leitfähigkeit des Metalloxid-Halbleiters. Die Fig. 2a zeigt die Verhältnisse für die Gaskomponente A. Die Verhältnisse für die Gaskomponente B werden in der Fig. 2b dargestellt. Auf der Abszisse der beiden Figuren ist die Zeit t eingetragen. Die Ordinaten der beiden Figuren enthalten die Konzentrationen C der Gase bzw. Dämpfe und die Leitfähigkeiten S des Matalloxid-Halbleiters. Es sei nun angenommen, dass die Gaskomponente A gemäss Fig. 2a mit einer Konzentration $C_0$ in der Umgebungsluft der zu überwachenden Räume vorhanden sein soll. Der Metalloxid-Halbleiter hat eine Leitfähigkeit $S_0$. Die Konzentration der Gaskomponente A soll nun im Laufe einer gewissen Zeit zunehmen. Bei Erreichen eines Schwellwertes der Konzentration $C_1$ bzw. der Leitfähigkeit $S_1$ (zur Zeit $t_F$) gibt der Metalloxid-Halbleiter ein Ausgangssignal auf die elektronische Schaltung der Fig. 3. In der Fig. 2a ist dieser Punkt mit F bezeichnet. Wenn nun, wie bereits im Zusammenhang mit der Fig. 1 erwähnt, die Temperatur des Metalloxid-Halbleiters rasch um den Betrag $-\Delta T$ erniedrigt wird, steigt die Empfindlichkeit des Metalloxid-Halbleiters bezüglich der Gaskomponente A, d.h. seine Leitfähigkeit erhöht sich auf $S_2$, so dass das Ausgangssignal auf die elektronische Schaltung ebenfalls vergrössert und nötigenfalls ein Alarmzustand signalisiert wird. In Fig. 2a ist die durch einen angenommenen Gaseinbruch verursachte Zunahme der Konzentration der gefährlichen Gaskomponente A vom Punkt F aus gestrichelt gezeichnet. Sie erreicht nach einer wesentlich längeren Zeit die Konzentration $C_2$, für welche die Leitfähigkeit bei konstanter Temperatur den Wert $S_2$ erreicht, für welche vorbeugende Massnahmen getroffen werden müssen.

Die Fig. 2b zeigt den zeitlichen Verlauf der Detektion der Gaskomponente B. Diese Komponente soll mit der Konzentra-

tion $C_0$ in der Umgebungsluft der zu überwachenden Räume vorhanden sein und im Laufe der Zeit auf den Wert $C_1$ ansteigen. Wenn zur Zeit $t_F$ der Konzentrationswert $C_1$ erreicht ist, besitzt der Metalloxid-Halbleiter eine Leitfähigkeit $S_1$. Das Ausgangssignal, das nun auf die elektronische Schaltung der Fig. 3 gelangt, bewirkt, dass die Temperatur des Metalloxid-Halbleiters rasch um den Betrag $-\Delta T$ abgesenkt wird. Wenn nun gemäss Fig. 2b nur die Gaskomponente B in der Umgebungsluft vorhanden ist, so ergibt sich eine Verringerung der Leitfähigkeit. Die gestrichelte Linie der Kurve zeigt die Zunahme der Leitfähigkeit des Halbleiters infolge Erhöhung der Konzentration der Gaskomponente B.

In der Fig. 3 ist die elektronische Schaltung zur Auswertung der Ausgangssignale des Metalloxid-Halbleiters dargestellt. Der Halbleiter 1 hat räumliche Abmessungen in der Grössenordnung von 5 x 5 mm und wird durch eine elektrische Heizung auf die gewünschte Temperatur gebracht. Die Spannung 0,1-10V für den Heizdraht 2, wird durch den Heizspannungsgenerator 3 erzeugt. Dieser Generator stellt die gewünschten Spannungswerte ein. Die Temperatur des Metalloxid-Halbleiters 1 wird so eingestellt wie es im Zusammenhang mit den Figuren 1 und 2 diskutiert wurde. Der Metalloxid-Halbleiter 1 sei in einem Raum, der in der Figur nicht dargestellt ist, angeordnet. Es sei nun angenommen, dass die Konzentration eines Gases, das z.B. die Komponente A sein kann, ansteigt. Der Metalloxid-Halbleiter 1 ändert in entsprechender Weise seine Leitfähigkeit S, wie dies die Figuren 1 und 2a zeigen. Die Spannungsquelle 5 legt eine konstante Spannung an den Metalloxid-Halbleiter, dessen Spannungssignale im Analogwert-Verstärker 4 entsprechend verstärkt werden. Die verstärkten Spannungssignale gelangen über Leitung 41 auf den FET 11 und auf die Ansprechschaltungen 7, 8, 9, 10 für den ersten, zweiten, dritten und vierten Spitzenwert der Leitfähigkeit bzw. Konzentration des Gases oder der Dämpfe. Die gleichen Signale gelangen über Leitung 43 auf den Grenzwertschalter 12, der jedoch nur ein Ausgangssignal erzeugt, wenn der Leitfähigkeitsgrenzwert nach der Temperaturabsenkung bzw. Temperaturerhöhung erreicht wurde. Im Komparator 6 wird das Spannungssignal, das Auskunft über die augenblickliche Leitfähigkeit des Halbleiters 1 gibt, verglichen mit dort gespeicherten SOLLWERTEN, die anhand der Fig. 1 festliegen. Solange bei der Temperatur $T_S$ des Halbleiters 1 die Konzentration des aus mehreren Komponenten bestehenden Gases oder der Dämpfe den Wert $C_1$ nicht erreicht hat, erzeugt der Komparator 6 kein Ausgangssignal. In diesem Fall ist der Leitfähigkeitswert $S_1$ gemäss Figuren 2a und 2b nicht erreicht.

Zur Erklärung der elektronischen Schaltung der Fig. 3 wird nun angenommen, dass die Werte $C_1$ und $S_1$ erreicht worden sind. Der Komparator 6 gibt nun ein Ausgangssignal auf Leitung 61, das den FET 71 der Schaltung 7 des ersten Spitzenwertes in den leitenden Zustand schaltet. Das gleiche Ausgangssignal gelangt auf den Stromkreis 14, der den Heizspannungsgenerator 3 über Leitung 140 so beeinflusst, dass die Temperatur des Metalloxid-Halbleiters 1 in gewünschter Weise ansteigt oder absinkt (Betrag). Die Schaltung 7 veranlasst nun den Analogwert- Vergleicher 13, dass über Leitung 130 ein Signal auf den Stromkreis 14 gelangt, das über Leitung 140 den Heizspannungsgenerator 3 so beeinflusst, dass die Heizspannung in der erwünschten Richtung (Vorzeichen) geändert wird. Im vorliegenden Ausführungsbeispiel ist der Analogwert-Vergleicher 13 für Wasserstoff ($H_2$), Kohlenmonoxid (CO) und Methan ($CH_4$) programmiert. Selbstverständlich ist die Programmierung für andere Gase und/oder Dämpfe ohne weiteres möglich. Nun erfolgt eine Temperaturänderung in der gewünschten Richtung (Vorzeichen) um den Betrag $\Delta$ T. Dies ist bereits im Zusammenhang mit den Figuren 1, 2a, 2b näher erläutert. Die durch die Temperaturänderungen bedingte Aenderungen der Leitfähigkeit des Metalloxid-Halbleiters 1 machen sich durch Aenderungen seines Ausgangssignals bemerkbar. Es sei nun angenommen, dass eine Reduzierung der Temperatur um den Wert $-\Delta$ T vorgenommen worden ist, so dass das Spannungssignal eine Erhöhung um den Wert $\Delta SA_1$ (Fig. 1) erfährt. Diese Spannungserhöhung gelangt auf Komparator 6 sowie über Leitung 41 auf die Schaltung 8 für den zweiten Spitzenwert und über Leitung 43 auf den Grenzwertschalter 12, der nun den FET 81 der Schaltung 8 durchschaltet. Die Schaltung 8 gibt nun auf den Analogwert-Vergleicher 13 das Signal für den zweiten Spitzenwert, der die Gaskomponente A (Fig. 1) detektiert. Wenn nun für diese Gaskomponente A spezifische Abwehrmassnahmen verlangt werden, so ist dies programmiert. Der Analogwert-Vergleicher 13 steuert in diesem Fall den FET 11 über Leitung 131 in den leitenden Zustand. Die Abwehrmassnahmen können nun durch die Anordnung 15 eingeleitet werden. Zu diesen Abwehrmassnahmen können gehören: akustische oder optische Alarmorganisation, Belüftung, Entlüftung, Löschgeräte oder dgl.. Nachdem die Leitfähigkeit des Metalloxid-Halbleiters 1 durch Verringerung der Konzentration der Gaskomponente A abgesunken ist, wird über die reset-Leitungen die Temperatur des Metalloxid-Halbleiters 1 auf den ursprünglichen Wert $T_S$ (Fig. 1) eingestellt.

Wenn jedoch nur die Gaskomponente B (Fig. 1) von Bedeutung ist, so wird in der Schaltung der Fig. 3 der Analogwert-Vergleicher 13 so geändert, dass über Leitung 130 der Stromkreis 14 veranlasst wird, die Heizspannung zu erhöhen, so dass die Temperatur des Metalloxid-Halbleiters 1 um den

- 11 -

Wert +$\Delta$T ansteigt. Der Grenzwertschalter 12 und die Schaltung 8 brauchen für diesen Zweck nicht geändert zu werden. Die elektronische Schaltung der Fig. 3 arbeitet in der gleichen Weise wie bei der vorhin ausführlich beschriebenen Erniedrigung der Temperatur um den Wert -$\Delta$T.

Wenn nun die Gaskomponente B detektiert werden soll und die Konzentration der dicht daneben liegenden Gaskomponente A bis zum Wert S der Leitfähigkeit (Fig. 1) ansteigen sollte, so wird die Schaltung 7 für den ersten Spitzenwert (Fig. 3), wie bereits beschrieben, ein Signal auf den Analogwert-Vergleicher 13 geben. Der veranlasst über Stromkreis 14 eine Temperaturerniedrigung, die das Signal des zweiten Spitzenwertes $\Delta SA_1$ und das Signal der Erniedrigung $\Delta SB_2$ über Leitung 41 auf die Schaltung 8 bringt.Der Analogwert-Vergleicher 13 ist nun informiert, dass die Gaskomponente B nicht vorhanden ist und schaltet daher den Alarm und die Abwehrmassnahmen nicht ein.

In der elektronischen Schaltung der Fig. 3 sind gestrichelt weitere Schaltungen 9 und 10 angedeutet, die für den dritten und vierten usw. Spitzenwert der Leitfähigkeit des Metalloxid-Halbleiters 1 vorgesehen sind. Die Schaltungen werden durch einem Grenzwertschalter 12 in Betrieb gesetzt, der auf die verschiedenen Spitzenwerte programmiert ist.

GP/js 23. Juli 1982.

PATENTANSPRUECHE
=====================

1. Verfahren zur Reduzierung von durch Störgase hervorgerufenen Falschalarmen in Gaswarnanlagen, die als gasempfindliches Element einen bei konstanter Temperatur
betriebenen Metalloxid-Halbleiter verwenden, d a d u r c h
g e k e n n z e i c h n e t , dass bei einem durch eine
unbekannte Gas- oder Dampfzusammensetzung hervorgerufenen
Ausgangssignal, herrührend von der Leitfähigkeitsänderung
des gasempfindlichen Elementes (1), seine Temperatur
rasch geändert wird, und das Vorzeichen sowie der Betrag der
hierdurch zusätzlichen Aenderung des Ausgangssignales
einer elektronischen Schaltung zur Diskriminierung des
Störgases zugeführt wird.

2. Verfahren zur Bestimmung der Zusammensetzung eines Gasgemisches mittels eines als Metalloxid-Halbleiter ausgebildeten gasempfindlichen Elementes, das auf konstante
Temperatur aufgeheizt ist, d a d u r c h g e k e n n -
z e i c h n e t , dass bei Vorhandensein eines Ausgangssignales des gasempfindlichen Elementes (1) seine Temperatur rasch nach der positiven oder negativen Seite
geändert wird und die hierdurch hervorgerufene Signaländerung nach Betrag und Vorzeichen dem Ausgangssignal
überlagert und einer elektronischen Schaltung zugeführt
wird.

3. Vorrichtung zur Durchführung des Verfahrens nach Anspruch 1, d a d u r c h   g e k e n n z e i c h n e t , dass ein Komparator (6), der das Ausgangssignal des als Metalloxid-Halbleiter ausgebildeten gasempfindlichen Elementes (1) empfängt, einen Schaltkreis (7) für den ersten Spitzenwert einschaltet, und ein Analogwert-Vergleicher (13) die programmierbare Aenderung der Temperatur des Halbleiters (1) zur Diskriminierung des Störgases durchführt.

4. Vorrichtung zur Durchführung des Verfahrens nach Anspruch 2, d a d u r c h   g e k e n n z e i c h n e t , dass ein Komparator (6) bei Vorhandensein eines ersten Spitzenwertes einen Schaltkreis (7) einschaltet, der den Analogwert-Vergleicher (13) veranlasst, die Temperatur des Halbleiters (1) nach der positiven oder negativen Seite um den Betrag $\Delta$ T zu ändern, wobei die Signaländerung durch einen Grenzwertschalter (12) dem Analogwert-Vergleicher (13) zur Analysierung der Komponenten der Gase bzw. Dämpfe zugeführt wird.

5. Vorrichtung zur Durchführung des Verfahrens nach Anspruch 2, d a d u r c h   g e k e n n z e i c h   n e t , dass der Analogwert-Vergleicher (13) über einen Stromkreis (14) die Heizung (3) des Metalloxid-Halbleiters (1) so steuert, dass die Temperatur über den gesamten Empfindlichkeitsbereich des Halbleiters kontinuierlich veränderbar ist.

6. Vorrichtung zur Durchführung des Verfahrens nach Anspruch 1 oder 2, d a d u r c h   g e k e n n z e i c h n e t , dass ein Grenzwertschalter (12), der das zweite und folgende Ausgangssignal des als Metalloxid-Halbleiter ausgebildeten gasempfindlichen Elementes (1) empfängt, den dem Ausgangssignal zugeordneten Schaltkreis (8,9,10) für
den zweiten und folgenden Spitzenwert der elektrischen
Leitfähigkeit des Metalloxid-Halbleiters (1) vorbereitet,
wobei das gleiche Ausgangssignal über Leitung (41) nur den
vorbereiteten Schaltkreis (8,9,10) einstellt.

GP     23.Juli 1982.

FIG. 1

FIG. 2a

FIG. 2b

FIG. 3

3(3)

0075101